# DEMANDE DE BREVET EUROPEEN

(11) **EP 0 805 285 A2**
(43) Date de publication de la demande: **05.11.1997**
(21) Numéro de dépôt: 97400948.2
(22) Date de dépôt: 25.04.1997
(51) Int. Cl.: F16D 1/108

(54) **Dispositif d'accouplement de deux arbres**

(30) Priorité: 02.05.1996 FR 9605605
(71) Demandeur: LEMFORDER NACAM S.A., 41100 Vendome (FR)
(72) Inventeur: Courgeon, Jean-Claude, 41100 Vendome (FR); Auriau, Jacky, 41100 Meslay (FR); Bouguerra, Amar, 41100 Blois (FR)
(74) Mandataire: Martinet & Lapoux

(57) **Abrégé**

Le dispositif d'accouplement de deux arbres (1, 2) aptes à tourner suivant un axe commun (X-X) comporte des moyens de liaison en rotation associés à des moyens de maintien axial. Les moyens de liaison en rotation consistent en des profils conjugués aux extrémités (5, 6) des arbres (1, 2). Les moyens de maintien axial comportent un manchon (3) en deux parties, qui est relié axialement à l'arbre (1), et qui coopère avec des moyens élastiques (23) montés à l'intérieur dudit manchon (3). L'extrémité (5, 6) de chacun des arbres (1, 2) est entourée par le manchon. Les moyens élastiques agissent après libération d'un système d'armement, qui est constitué par des plots (17) appartenant au manchon (3), qui coopèrent avec des cames (18) agencées à l'extrémité (5) de l'un (1) des arbres.

## Description

La présente invention est relative à un dispositif d'accouplement de deux arbres aptes à tourner suivant un axe commun.

Le dispositif d'accouplement selon l'invention est plus particulièrement destiné à être monté sur une colonne de direction de véhicule automobile.

On connaît des dispositifs d'accouplement de deux arbres de colonne de direction de véhicules automobiles qui mettent en oeuvre des systèmes de rattrapage de jeux nécessitant l'apport d'énergie extérieure par un ressort ou par l'opérateur. La prise de jeu du système nécessite un apport d'énergie très important, et donc un ressort avec une très forte précontrainte, ce qui est défavorable à la facilité de montage.

Dans la demande de brevet français FR-A-2 733 155, la demanderesse divulgue un système d'accouplement, dans lequel était proposée l'association de deux profils conjugués avec un système de maintien en position de l'accouplement des arbres, constitué par un manchon coopérant avec des moyens élastiques.

Le but de la présente invention est de proposer un autre dispositif d'accouplement de deux arbres, qui soit d'une plus grande facilité de montage dans un temps le plus réduit possible, tout en garantissant un rattrapage de jeu correct, et le maintien en place de l'accouplement des arbres.

Selon l'invention, le dispositif d'accouplement d'extrémités de deux arbres aptes à tourner suivant un axe commun comporte des moyens de liaison en rotation, qui sont constitués par des profils conjugués agencés à chacune des extrémités des deux arbres, sur un plan sensiblement perpendiculaire à l'axe commun. Les profils conjugués ont des flancs inclinés par rapport à ce plan, de manière à s'appliquer les uns contre les autres, et à rester en place sous l'action d'un système de maintien axial. Le système de maintien axial est constitué par un manchon et des moyens élastiques. Le manchon est relié axialement à l'un des arbres, et il entoure l'extrémité de chacun des arbres, ainsi que les moyens élastiques, qui sont montés à l'intérieur dudit manchon.

Le manchon est en deux parties qui sont assemblées autour de l'extrémité femelle de l'arbre comportant le profil conjugué en creux. Le manchon comporte des première et seconde faces d'appui d'extrémité qui sont sensiblement perpendiculaires à l'axe commun.

Les moyens élastiques sont disposés entre la première face d'appui du manchon, et une face d'appui externe de l'extrémité femelle de l'arbre, qui est aménagée dans un plan sensiblement perpendiculaire à l'axe des arbres.

Les moyens élastiques agissent par l'intermédiaire de la deuxième face d'appui du manchon, sur une face d'appui externe de l'extrémité mâle de l'arbre comportant le profil conjugué en relief, et qui est aménagée dans un plan sensiblement perpendiculaire à l'axe. Les moyens élastiques agissent après engagement des profils conjugués l'un dans l'autre et libération d'un système d'armement des moyens élastiques. Ce système d'armement est constitué par des plots qui sont aménagés sur la deuxième face d'appui du manchon et qui coopèrent avec des cames qui sont aménagées sur la face d'appui interne de l'extrémité femelle qui est dans un plan sensiblement perpendiculaire à l'axe des arbres.

Avantageusement les moyens élastiques consistent en un ressort de compression, ou en des rondelles élastiques.

Selon une réalisation avantageuse de l'invention, le manchon comporte :
- une première partie constituée par une embase munie de deux prolongements latéraux, et
- une deuxième partie constituée par une plaque de fermeture, les prolongements latéraux traversant la plaque de fermeture avec laquelle ils sont solidarisés,
- l'embase comportant la première face d'appui et la plaque de fermeture comportant la deuxième face d'appui.

Dans une autre réalisation très intéressante de l'invention, le manchon comporte :
- une première partie constituée par une embase, et
- une deuxième partie constituée par une plaque de fermeture munie de deux prolongements latéraux qui sont inclus dans un cache de manoeuvre,
- l'embase étant montée dans les prolongements latéraux et le cache de manoeuvre et solidarisée avec eux, et
- l'embase comportant la première face d'appui et la plaque de fermeture comportant la deuxième face d'appui.

Afin de faciliter le fonctionnement du dispositif d'accouplement selon l'invention, celui-ci comporte un embout de guidage du manchon et de centrage des moyens élastiques. L'embout de guidage et de centrage est un élément indépendant, qui comporte une partie cylindrique débouchant dans un trou central aménagé dans l'embase du manchon. La partie cylindrique porte et centre les moyens élastiques, et est munie d'une semelle qui est disposée entre la face d'appui externe de l'extrémité femelle et les moyens élastiques.

Dans une autre réalisation, l'embout de guidage et de centrage est un élément solidaire de l'extrémité femelle, avec laquelle il constitue un ensemble monobloc. L'embout comporte une partie cylindrique, qui débouche dans un trou central aménagé dans l'embase du manchon, la partie cylindrique portant et centrant les moyens élastiques.

Afin de garantir le maintien du système d'armement en position bloquée, qui correspond à la position de livraison de l'accouplement, le dispositif d'accouplement comporte un ressort de compression et une goupille escamotable de blocage d'armement disposée entre l'extrémité femelle et le manchon. Dans d'autres variantes de réalisation, il est prévu une goupille intégrée de blocage d'armement.

Afin d'améliorer et de faciliter le montage du dispositif d'accouplement selon l'invention, celui-ci comporte un système de verrouillage automatique. Dans ce système de verrouillage automatique, les moyens élastiques sont constitués par un ressort de torsion et de compression dont une extrémité coopère avec l'embout de guidage et de centrage, et dont l'autre extrémité coopère avec l'un des prolongements latéraux du manchon. Le système d'armement est maintenu en position bloquée par une goupille de blocage d'armement qui est disposée entre l'extrémité femelle et le manchon, de manière qu'après enlèvement de la goupille de blocage, le ressort de torsion et de compression agisse afin de constituer un système de verrouillage automatique.

Dans d'autres réalisations de l'invention, le système d'armement est maintenu en position bloquée par une goupille intégrée de blocage d'armement, qui est désengagée par l'introduction de l'extrémité mâle dans l'extrémité femelle, ce qui permet au ressort de torsion et de compression d'agir, afin de constituer le verrouillage automatique. Selon l'invention, la goupille intégrée de blocage d'armement est constituée par au moins une clé souple agencée dans une encoche de l'embase. La clé souple est munie d'un poussoir, qui coopère avec l'embout, de manière que l'engagement de l'extrémité mâle dans l'extrémité femelle permette à l'extrémité mâle de repousser le poussoir et de désengager la clé et le poussoir de l'embout de l'extrémité femelle. Dans une autre réalisation, la goupille intégrée de blocage d'armement est constituée par une clé munie d'un poussoir et montée dans deux rainures de l'embout de l'extrémité femelle. La clé est engagée et plaquée dans une encoche de l'embase par un ressort de compression, qui est disposé dans l'embout, de manière que l'engagement de l'extrémité mâle dans l'extrémité femelle permette à l'extrémité mâle de repousser le poussoir et de désengager la clé de l'embase.

Afin de faciliter la préhension du dispositif lors de la manoeuvre de verrouillage, la plaque de fermeture du manchon comporte un cache de manoeuvre avec lequel elle est solidaire. Ce cache de manoeuvre entoure le manchon et une partie de l'extrémité femelle correspondante. De plus, il est muni de deux lumières à travers lesquelles passent deux dents de la goupille de blocage d'armement.

Dans le but de garantir un montage correct du dispositif d'accouplement selon l'invention, celui-ci comporte un système de sécurité du verrouillage de l'accouplement en position fermée. Ce système de sécurité est constitué par un ressort de compression, qui est disposé dans un évidement aménagé dans l'embout de guidage et de centrage. Ce ressort de compression s'appuie sur le fond de l'évidement, de manière à repousser la face d'appui interne de l'extrémité mâle, dans le cas où celle-ci n'est pas verrouillée correctement dans l'extrémité femelle.

Dans une autre réalisation du système de sécurité du verrouillage de l'accouplement en position fermée, celui-ci est constitué par une clé munie d'un poussoir. Cette clé est montée dans deux rainures de l'embout de l'extrémité femelle, et elle est maintenue dans un fond desdites rainures par un ressort de compression disposé dans l'embout ; de manière à repousser la face d'appui interne de l'extrémité mâle, dans le cas où celle-ci n'est pas verrouillée correctement dans l'extrémité femelle.

Dans une variante de réalisation particulièrement intéressante de l'invention, le cache de manoeuvre est solidaire de l'embase du manchon. Ce cache de manoeuvre a un fond qui comporte un embout de centrage des moyens élastiques. De plus ce cache de manoeuvre entoure le manchon et une partie de l'extrémité femelle correspondante.

Dans une forme préférée de réalisation de l'invention, le système d'armement est constitué par trois plots équidistants qui sont localisés sur la deuxième face d'appui du manchon. Ces trois plots coopèrent avec trois cames qui sont localisées sur la face d'appui interne de l'extrémité femelle. De plus, chacune des cames comporte une butée, afin d'assurer un blocage positif en rotation. Les profils conjugués, agencés à chacune des extrémités mâle et femelle des deux arbres, sont constitués chacun de trois flancs équidistants.

Selon l'invention, le procédé de montage du dispositif d'accouplement de deux arbres aptes à tourner suivant un axe commun, et comportant des moyens de liaison en rotation associés à des moyens de maintien axial, est caractérisé en ce que l'embase avec les deux prolongements latéraux du manchon est montée sur l'extrémité femelle de l'arbre, qui est munie des moyens élastiques. La plaque de fermeture est alors engagée sur les deux prolongements latéraux, avec lesquels elle est solidarisée. Le système d'armement des moyens élastiques est mis en position bloquée. L'extrémité mâle de l'autre arbre est alors engagée axialement dans l'extrémité femelle, jusqu'à ce que des flancs correspondants viennent s'appliquer les uns contre les autres, et restent ainsi en place sous l'action du système de maintient axial, après libération du système d'armement des moyens élastiques, par rotation du manchon, afin que la deuxième face d'appui du manchon s'applique contre la face d'appui externe de l'extrémité mâle pour maintenir le dispositif d'accouplement en position fermée ; le système d'armement des moyens élastiques étant constitué par des plots aménagés sur la deuxième face d'appui du manchon, qui coopère avec des cames dites aménagées sur la face d'appui interne de l'extrémité femelle.

Dans une variante de réalisation, le procédé de montage est caractérisé en ce que l'extrémité femelle de l'arbre muni des moyens élastiques est monté dans la plaque de fermeture munie des deux prolongements latéraux inclus dans le cache de manoeuvre. L'embase est engagée dans le cache de manoeuvre et les prolongements latéraux avec lesquels elle est solidarisée.

De plus, le procédé de montage selon l'invention est caractérisé en ce que les moyens élastiques sont constitués par un ressort de torsion et de compression, dont une extrémité coopère avec l'embout de l'extrémité femelle, et dont l'autre extrémité coopère avec l'un des prolongements latéraux du manchon. Le système d'armement des moyens élastiques est maintenu en position bloquée par une goupille escamotable de blocage d'armement, qui est disposée entre l'extrémité femelle et le manchon, ce qui correspond à la position de livraison. Le système d'armement est en position libre lorsque la goupille escamotable de blocage est enlevée, ce qui permet au ressort de torsion et de compression de faire tourner le manchon par rapport à l'extrémité femelle, ce qui correspond à la position fermée du dispositif d'accouplement, dont le maintien est garanti par l'action du ressort de torsion et de compression.

Dans une variante de réalisation, le procédé de montage est caractérisé en ce que le système d'armement des moyens élastiques est maintenu en position bloquée par une goupille intégrée de blocage d'armement. Cette goupille intégrée est agencée dans l'embase du manchon et elle est engagée dans l'embout de l'extrémité femelle, ce qui correspond à la position de livraison. Le système d'armement est en position libre lorsque l'extrémité mâle est engagée dans l'extrémité femelle, ce qui repousse et désengage la goupille intégrée de blocage d'armement.

Le dispositif d'accouplement selon l'invention présente ainsi l'avantage de permettre un montage rapide sans effort, aisé et sans aucun jeu à neuf et après usage, de plus, l'accouplement une fois réalisé, celui-ci est garanti mécaniquement. Enfin, les pièces utilisées sont relativement simples, et donc peu coûteuses, ainsi que peu encombrantes.

D'autres caractéristiques et avantages de l'invention ressortiront de la description qui va suivre donnée à titre d'exemples nullement limitatifs en référence aux dessins annexés sur lesquels :
- la figure 1 est une vue d'ensemble en coupe axiale du dispositif d'accouplement selon l'invention, l'ensemble du dispositif d'accouplement étant en position livraison ;
- la figure 2 est une vue prise le long de la ligne II-II de la figure 1 ;
- la figure 3 est une coupe axiale dans un plan perpendiculaire à celui de la figure 1, l'ensemble du dispositif d'accouplement étant en position fermée ;
- la figure 4 est une coupe prise le long de la ligne IV - IV de la figure 3 ;
- la figure 5 est une vue en perspective éclatée de l'ensemble du dispositif d'accouplement avant le montage ;
- la figure 6 est une vue d'ensemble en coupe axiale d'un autre mode de réalisation de l'invention, l'ensemble du dispositif d'accouplement étant en position livraison ;
- la figure 7 est une coupe prise le long de la ligne VII-VII de la figure 6 ;
- la figure 8 est une coupe axiale dans un plan perpendiculaire à celui de la figure 6, l'ensemble du dispositif d'accouplement étant en position fermée ;
- la figure 9 est une coupe axiale analogue à la figure 3, d'une autre réalisation de l'invention, l'ensemble du dispositif d'accouplement étant en position fermée ;
- la figure 10 est une vue d'ensemble en coupe axiale d'une autre réalisation de l'invention, l'ensemble du dispositif d'accouplement étant en position livraison ;
- la figure 11 est une coupe prise le long de la ligne XI-XI de la figure 10 ;
- la figure 12 est une vue d'ensemble en coupe axiale d'une autre réalisation de l'invention, l'ensemble du dispositif d'accouplement étant en position livraison ;
- la figure 13 est une coupe axiale analogue à la figure 12, l'ensemble du dispositif d'accouplement étant en position fermée ;
- la figure 14 est une coupe prise le long de la ligne XIV-XIV de la figure 12 ;
- la figure 15 est une coupe prise le long de la ligne XV-XV de la figure 12 ;
- la figure 16 est une vue d'ensemble en coupe axiale d'une autre réalisation de l'invention, l'ensemble du dispositif d'accouplement étant en position livraison ;
- la figure 17 est une coupe prise le long de la ligne XVII-XVII de la figure 16 ;
- la figure 18 est une vue partielle en coupe axiale d'une variante de réalisation de l'invention, l'ensemble du dispositif d'accouplement étant en position de livraison ;
- la figure 19 est une coupe prise le long de la ligne XIX-XIX de la figure 18 ;
- la figure 20 est une vue en perspective cavalière de la figure 18 ;
- la figure 21 est une vue analogue à la figure 18, l'ensemble du dispositif d'accouplement étant en position fermée ;
- la figure 22 est une vue partielle en coupe axiale d'une variante de réalisation de l'invention, l'ensemble du dispositif d'accouplement étant en position livraison ;
- la figure 23 est une coupe prise le long de la ligne XXIII-XXIII de la figure 22 ;
- la figure 24 représente le profil de la came suivant l'invention ; et
- la figure 25 représente un autre profil de came suivant l'invention.

Le dispositif d'accouplement selon l'invention est destiné à relier deux arbres référencés 1 et 2, qui sont aptes à tourner suivant un axe commun X-X. Le mode de réalisation représenté sur les figures se rapporte à un dispositif d'accouplement plus particulièrement destiné à une colonne de direction de véhicule automobile, l'arbre 1 étant l'arbre menant et appartenant à la colonne de direction au moyen d'une mâchoire de cardan, l'arbre 2 étant l'arbre mené et appartenant à la tige du pignon du boîtier de direction.

Comme on peut le voir sur les différentes figures, le dispositif d'accouplement des deux arbres 1 et 2 comporte des moyens de liaison en rotation des deux arbres 1 et 2, qui sont associés à un système de maintien axial. Les moyens de liaison en rotation sont constitués par des profils conjugués, sur chacun des arbres 1 et 2. L'arbre 1 a une extrémité femelle 5 qui est munie de deux branches 4. Cette extrémité femelle 5 comporte le profil conjugué en creux. L'arbre 2 a une extrémité mâle 6, qui comporte le profil conjugué en relief. Ces profils conjugués sont agencés sur un plan sensiblement perpendiculaire à l'axe commun X-X, avec des flancs inclinés par rapport à ce plan. L'extrémité femelle 5 a des flancs 7, et l'extrémité mâle 6 a des flancs 8. Dans le cas des réalisations de l'invention représentées sur les figures, les flancs 7 et 8 des profils conjugués sont au nombre de trois, à égale distance les uns des autres. Après emmanchement de l'extrémité mâle 6 dans l'extrémité femelle 5, les flancs 7 et 8 s'appliquent les uns contre les autres, de manière à réaliser la liaison en rotation, et restent en place sous l'action du système de maintien axial.

L'extrémité femelle 5 a une face d'appui interne 9 et une face d'appui externe 11, tandis que l'extrémité mâle 6 a une face d'appui interne 10 et une face d'appui externe 12. Toutes ces faces d'appui sont réalisées dans des plans sensiblement perpendiculaires à l'axe X-X.

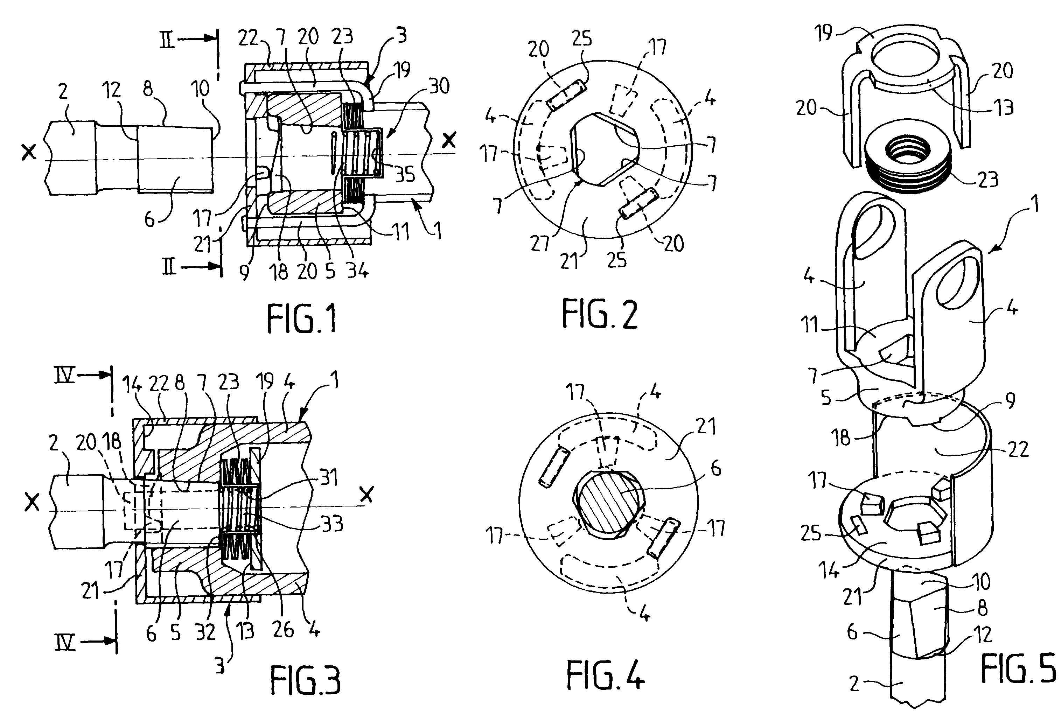

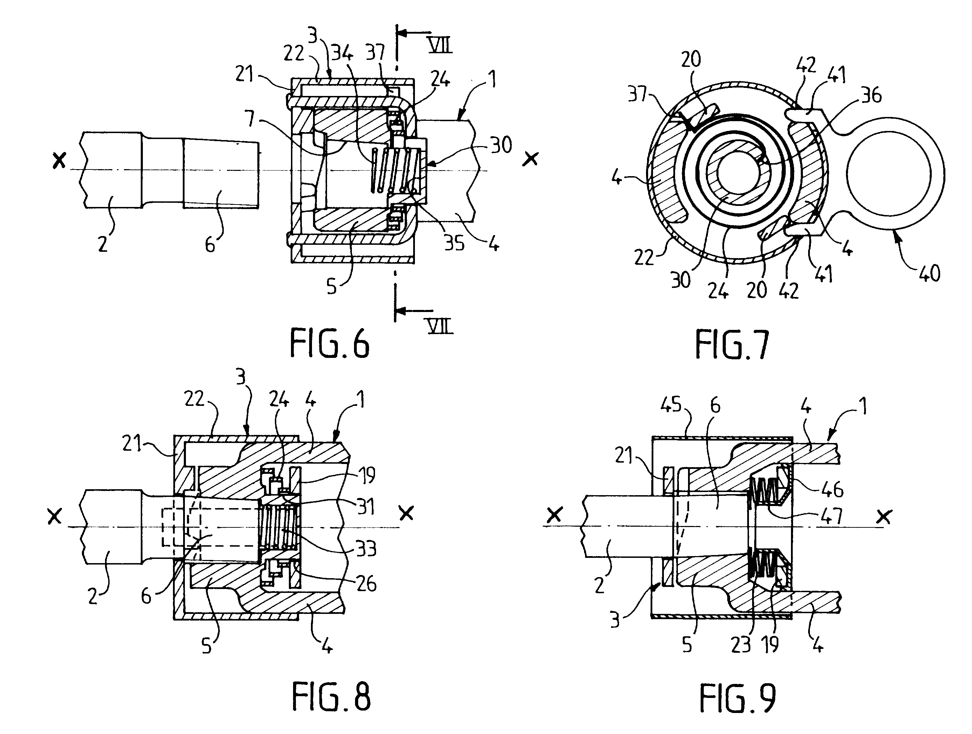

Le système de maintien axial est constitué par un manchon 3 et des moyens élastiques, qui peuvent être des rondelles élastiques 23 comme représenté sur les figures 1, 2, 3, 4, 5 et 9, ou un ressort de torsion et de compression 24, comme cela est représenté sur les figures 6, 7 et 8.

La réalisation représentée sur les figures 1 à 9 a un manchon 3, qui comporte une embase 19 munie de deux prolongements latéraux 20, et une plaque de fermeture 21. Les deux prolongements latéraux 20 passent à travers des lumières 25, qui sont aménagées dans la plaque de fermeture 21.

Lors du montage, l'embase 19 est engagée dans l'extrémité femelle 5, qui est munie des rondelles élastiques 23 placées contre la face d'appui externe 11. Pour cela les prolongements latéraux 20 passent entre les deux branches 4 et entourent l'extrémité 5, pour pénétrer dans les lumières 25 de la plaque de fermeture 21, qui est disposée en face de la face d'appui interne 9 de l'extrémité femelle 5. Les extrémités des prolongements latéraux 20 sont ensuite sertis sur la plaque de fermeture 21.

De plus la plaque de fermeture 21 est munie d'une lumière centrale 27, dont le contour correspond au contour de passage de l'extrémité mâle 6.

Ainsi le manchon 3 est en deux parties, l'une constituée de l'embase 19 et des prolongements latéraux 20, et l'autre de la plaque de fermeture 21. De plus, le manchon possède deux faces d'appui à chacune de ces extrémités, sensiblement perpendiculaires à l'axe commun X-X. Une face d'appui 13 appartient à l'embase 19 du côté des rondelles élastiques 23, et une face d'appui 14 appartient à la plaque de fermeture 21, du côté de la face interne 9 de l'extrémité femelle 5.

Le manchon 3 est relié axialement à l'arbre 1 par l'intermédiaire des prolongements latéraux 20, qui sont guidés entre les branches 4 de l'extrémité femelle 5. Le manchon 3 est assemblé ainsi autour de l'extrémité femelle 5 de l'arbre 1, et il entoure également l'extrémité mâle 6, lorsque l'accouplement est réalisé. Les rondelles élastiques 23 sont ainsi disposées à l'intérieur du manchon 3, entre la face d'appui 13 du manchon et la face d'appui externe 11 de l'extrémité femelle 5. Les moyens élastiques 23 agissent par l'intermédiaire de l'autre face d'appui 14 du manchon 3, sur la face d'appui externe 12 de l'extrémité mâle 6 après engagement des profils conjugués l'un dans l'autre, et libération d'un système d'armement des moyens élastiques.

Le système d'armement est constitué par trois plots 17, qui sont aménagés sur la face d'appui 14 du manchon 3 et équidistants. Ces trois plots 17 coopèrent respectivement avec trois cames 18, qui sont aménagées sur la face d'appui interne 9 de l'extrémité femelle 5.

Afin de faciliter l'appréhension de l'accouplement, le manchon 3 comporte un cache de manoeuvre 22 qui est solidaire de la plaque de fermeture 21, et qui est disposé sur son pourtour de manière à entourer le manchon 3 et la partie de l'extrémité femelle 5 correspondante. Ce cache de manoeuvre 22 n'est représenté qu'en partie sur la figure 5, afin de montrer l'intérieur de la plaque de fermeture 21.

Pour améliorer le fonctionnement de l'accouplement, le dispositif comporte un embout 30 de guidage du manchon 3 et de centrage des rondelles élastiques 23. L'embout 30 est un élément indépendant de l'extrémité femelle 5 et comporte une partie cylindrique 31 qui se prolonge par une semelle 32. La partie cylindrique 31 porte et centre les rondelles élastiques 23 et débouche dans un trou central 26 aménagé dans l'embase 19. La semelle 32 est disposée entre la face d'appui externe 11 de l'extrémité femelle 5 et les rondelles élastiques 23.

Dans la réalisation représentée sur les figures 6, 7 et 8, l'embout 30 de guidage du manchon 3 et de centrage des moyens élastiques est un élément solidaire de l'extrémité femelle 5, avec laquelle il constitue un ensemble monobloc. L'embout 30 comporte une partie cylindrique 31 débouchant dans un trou central 26 aménagé dans l'embase 19 du manchon 3.

De plus, dans cette réalisation de l'invention, le dispositif comporte un système de verrouillage automatique pour faciliter le montage, représenté sur la figure 7. Dans ce système, les moyens élastiques sont constitués par un ressort de torsion et de compression 24, qui a une extrémité 36 qui vient s'engager dans l'embout 30 de l'extrémité femelle 5, et l'autre extrémité 37 qui s'applique contre l'un des prolongements latéraux 20 du manchon 3. Le système d'armement est maintenu en position bloquée par une goupille de blocage d'armement 40, qui est disposée entre l'extrémité femelle 5 et le manchon 3, c'est-à-dire entre l'un des prolongements latéraux 20 du manchon 3, et l'une des branches 4 de l'extrémité 5. Pour cela le cache de manoeuvre 22 est muni de deux lumières 42 à travers lesquelles passent les deux dents 41 de la goupille de blocage d'armement 40, qui sont montées sur la branche 4. Après enlèvement de la goupille 40, le ressort de torsion et de compression 24 agit afin de constituer un système de verrouillage automatique, qui met le système d'armement en position libre, et qui assure le maintien du dispositif d'accouplement en position fermée.

Afin d'assurer que le dispositif d'accouplement soit effectivement réalisé, l'invention comporte un système de sécurité du verrouillage de l'accouplement entre les extrémités des arbres. Ce système est représenté sur les figures 1, 3, 6 et 8, et il est constitué par un ressort de compression 34, qui est disposé dans un évidement 33 aménagé dans l'embout 30 de guidage et de centrage. Le ressort 34 s'applique sur le fond 35 de l'évidement 33, de manière à repousser la face d'appui interne 10 de l'extrémité mâle 6, dans le cas où celle-ci n'est pas verrouillée correctement dans l'extrémité femelle 5.

D'autres réalisations de l'invention sont décrites maintenant dans lesquelles les éléments ayant la même fonction constitutive que les éléments précédemment décrits ont la même référence.

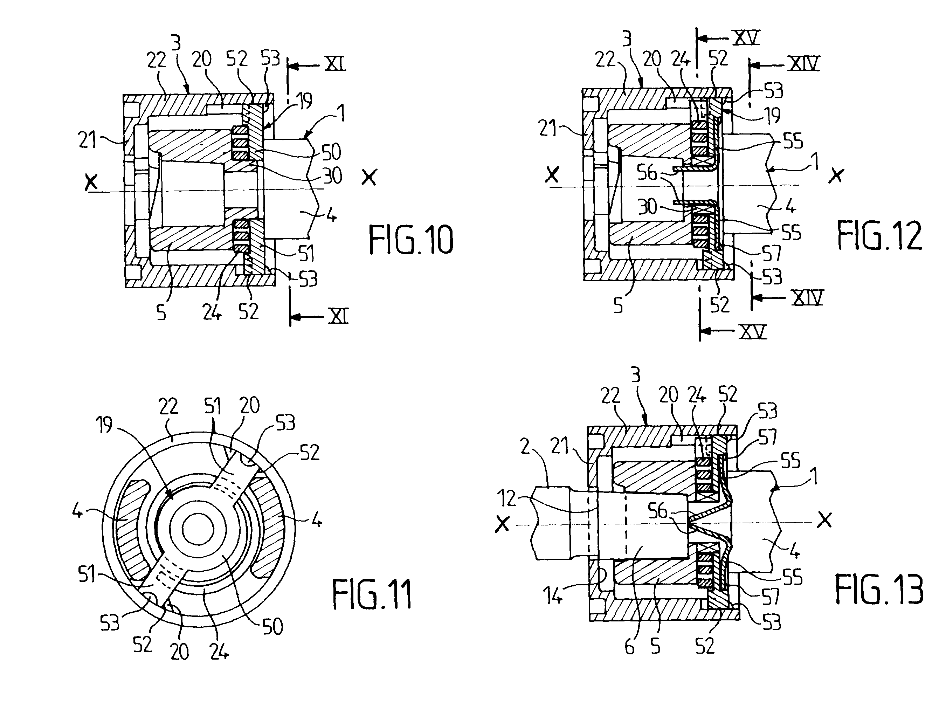

Les réalisations de l'invention représentées sur les figures 10 à 17 ont un manchon 3 qui comporte une embase 19 et une plaque de fermeture 21 munie de deux prolongements latéraux 20 inclus dans un cache de manoeuvre 22. L'embase 19 est constituée par une partie centrale 50 et deux bras 51 qui s'engagent dans l'encoche 52 correspondante aménagée dans le prolongement latéral 20 et le cache de manoeuvre 22.

Lors du montage, l'extrémité femelle 5 de l'arbre 1 munie des moyens élastiques 23 ou 24 est montée dans la plaque de fermeture 21 munie des deux prolongements latéraux 20 inclus dans le cache de manoeuvre 22. Pour cela les prolongements latéraux 20 passent entre les deux branches 4 et entourent l'extrémité 5. Les deux bras 51 de l'embase 19 sont engagés chacun dans l'encoche 52 correspondante aménagée dans le cache de manoeuvre 22 et dans les prolongements latéraux 20. Les extrémités des bras 51 sont ensuite solidarisés avec les prolongements latéraux 20 et le cache de manoeuvre 22 par des sertissages 53.

Ainsi le manchon 3 est en deux parties, l'une constituée de l'embase 19, et l'autre de la plaque de fermeture 21 munie des deux prolongements latéraux 20 inclus dans le cache de manoeuvre 22. De plus, le manchon possède les deux faces d'appui à chacune de ses extrémités : la face d'appui 13 appartient à l'embase 19 et la face d'appui 14 appartient à la plaque de fermeture 21.

Dans la réalisation représentée sur les figures 10 et 11, les moyens élastiques sont constitués par un ressort de compression 24. Dans ce type de réalisation comme dans celui représenté sur les figures 1 à 5, l'accouplement est réalisé entièrement manuellement en commençant par un mouvement axial d'engagement, et en effectuant ensuite un mouvement de rotation du manchon 3.

Dans ces réalisations, le système d'armement peut être maintenu en position bloquée par une goupille escamotable de blocage d'armement 40 qui est disposée entre l'extrémité femelle 5 et le manchon 3. Cette goupille escamotable 40 est montée de la même façon que celle décrite à la figure 7, et elle traverse deux lumières 42 aménagées dans le cache de manoeuvre 22.

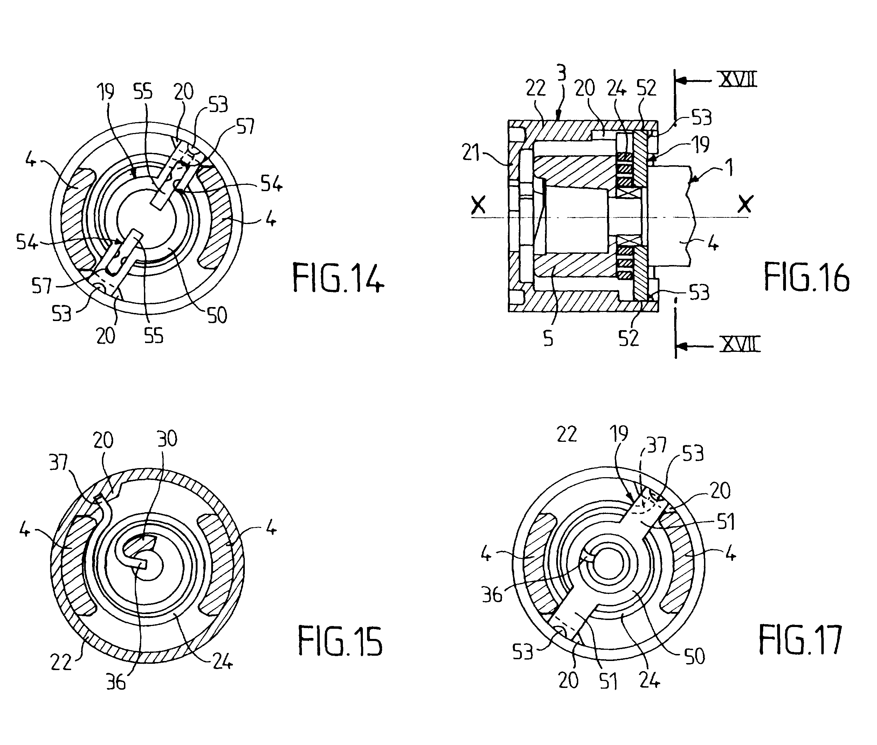

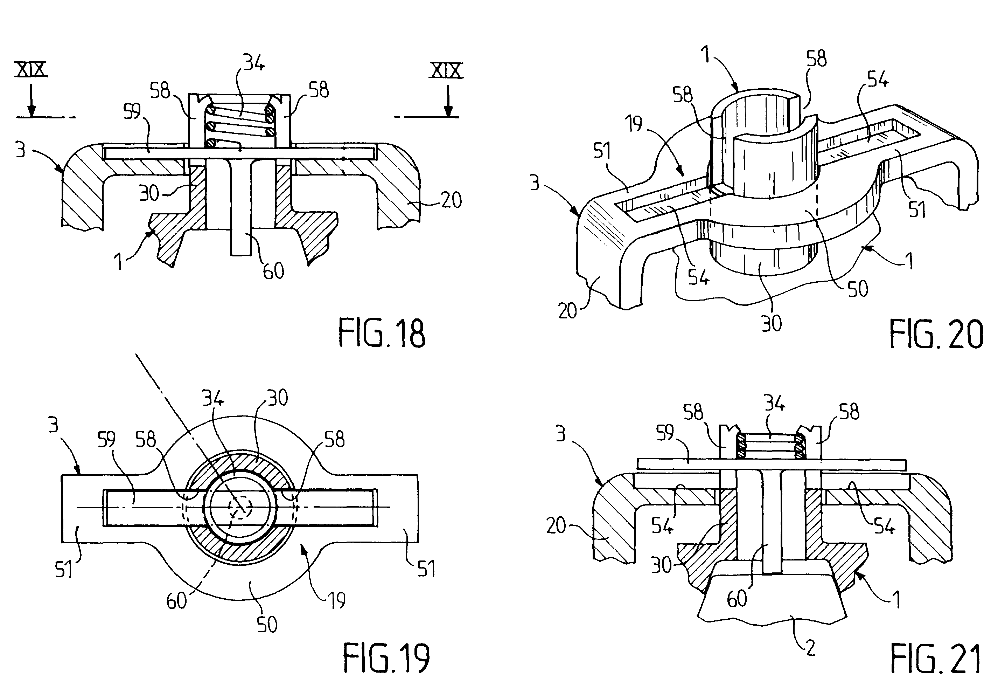

La réalisation représentée sur les figures 16 et 17 est analogue à celui décrit sur les figures 6, 7 et 8, avec une réalisation de manchon 3 différente. Dans les figures 16 et 17, les moyens élastiques sont constitués par un ressort de torsion et de compression 24, qui a une extrémité 36 qui s'applique contre l'embout 30 de l'extrémité femelle 5, et l'autre extrémité 37 qui vient s'engager dans l'un des prolongements latéraux 20. Le système d'armement est maintenu en position bloquée par la goupille escamotable de blocage d'armement 40 qui est disposée entre l'extrémité femelle 5 et le manchon 3. Pour cela le cache de manoeuvre 22 est muni de deux lumières 42 à travers lesquelles passent les deux dents 41 de la goupille escamotable de blocage d'armement 40. Après enlèvement de la goupille 40, le ressort de torsion et de compression 24 agit afin de constituer un système de verrouillage automatique, qui met le système d'armement en position libre, et qui assure le maintien du dispositif d'accouplement en position fermée.

Dans la réalisation de l'invention représentée sur les figures 12 à 15, les moyens élastiques sont constitués par un ressort de torsion et de compression 24. Le ressort 24 a une extrémité 36 qui s'appuie contre l'embout 30 et l'autre extrémité 37 qui vient s'engager dans l'un des prolongements latéraux 20 du manchon 3. Le système d'armement est maintenu en position bloquée par une goupille intégrée de blocage d'armement, qui est constituée par deux clés souples 55. Chacune de ces clés souples 55 est munie d'un poussoir 56, et est agencée dans une encoche 54 aménagée dans le bras 51 correspondant de l'embase 19. L'extrémité de chacune des clés souples 55 est solidarisée avec l'embase 19 par un sertissage 57. Chacun des poussoirs 56 coopère avec l'embout 30 de l'extrémité femelle 5, de manière qu'après l'engagement de l'extrémité mâle 6 dans l'extrémité femelle 5, qui permet à l'extrémité mâle 5 de repousser le poussoir 56 afin de désengager la clé 55 et le poussoir 56 de l'embout 30 de l'extrémité femelle 5 ; le ressort de torsion et de compression 24 agisse afin de constituer un système de verrouillage automatique.

Les figures 18 à 21 représentent une autre réalisation de la goupille intégrée de blocage d'armement. Dans ce cas, la goupille intégrée de blocage d'armement est constituée par une clé 59 munie d'un poussoir 60. La clé 59 est agencée de manière à pouvoir pénétrer dans les deux encoches 54 de l'embase 19. La clé 59 est montée dans deux rainures 58 de l'embout 30 de l'extrémité femelle 5. Cette clé 59 est engagée et plaquée dans les encoches 54 de l'embase 19 par un ressort de compression 34, qui est disposé dans l'embout 30, et qui s'appuie sur le fond de cet embout 30 constitué par une déformation aménagée sur l'extrémité dudit embout. L'engagement de l'extrémité mâle 6 dans l'extrémité femelle 5 permet à l'extrémité mâle 6 de repousser le poussoir 60, afin de désengager la clé 59 de l'embase 19, le ressort de torsion et de compression 24 peut alors agir afin de constituer un système de verrouillage automatique.

Dans les réalisations représentées sur les figures 12 à 15 et 18 à 21, les moyens élastiques peuvent être constitués par un simple ressort de compression 24. Dans ce cas, le système d'armement est maintenu en position bloquée par la goupille intégrée de blocage d'armement, et le verrouillage se fait manuellement.

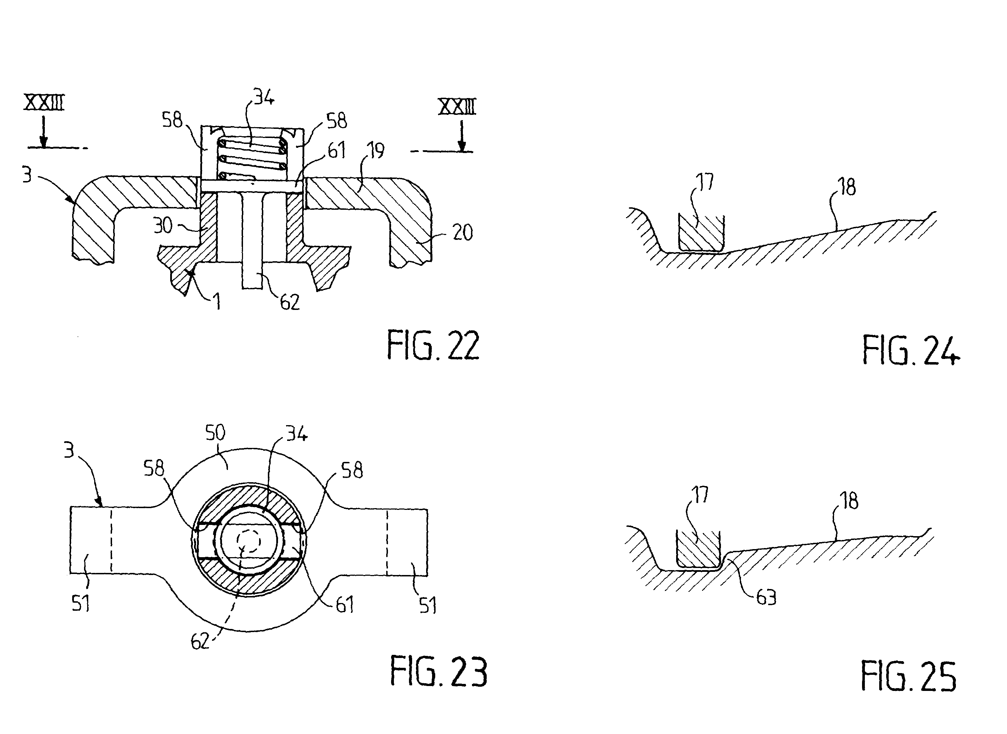

Les figures 22 et 23 représentent une autre réalisation du système de sécurité du verrouillage de l'accouplement en position fermée. Dans cette réalisation, le système de sécurité est constitué par une clé 61, qui est munie d'un poussoir 62. Cette clé 61 est montée dans deux rainures 58 de l'embout 30 de l'extrémité femelle 5. Cette clé 61 est maintenue dans le fond desdites rainures 58 par un ressort de compression 34 qui est disposé dans l'embout 30 et qui s'appuie dans un fond aménagé à l'extrémité de l'embout 30. L'action du ressort 34 sur la clé 61 et donc sur le poussoir 62 permet de repousser la face d'appui interne 10 de l'extrémité mâle 6, dans le cas où celle-ci n'est pas verrouillée correctement dans l'extrémité femelle 5.

Dans toutes les réalisations précédemment décrites, il est possible de déverrouiller le dispositif d'accouplement par rotation manuelle du manchon 3. Afin d'assurer un blocage en rotation du manchon 3 par rapport à la mâchoire 5, après verrouillage du dispositif, il est prévu sur les cames 18 aménagées sur l'extrémité 5 et représentées sur la figure 24, une butée 63 comme cela est représenté sur la figure 25.

Le procédé de montage du dispositif d'accouplement des deux arbres 1 et 2 aptes à tourner suivant un axe commun X-X comporte des moyens de liaison en rotation qui sont associés à des moyens de maintien axial comme cela est représenté notamment sur la figure 5. Dans ce procédé de montage, l'embase 19 avec les deux prolongements latéraux 20 du manchon 3 est montée sur l'extrémité femelle 5 de l'arbre 1, qui est munie des moyens élastiques constitués par les rondelles élastiques 23 ou par le ressort 24. La plaque de fermeture 21 est alors engagée sur les deux prolongements latéraux 20, avec lesquels elle est solidarisée. Le système d'armement des moyens élastiques est alors mis en position bloquée. L'extrémité mâle 6 de l'autre arbre 2 est engagée axialement dans l'extrémité femelle 5 jusqu'à ce que les flancs 7 et 8 correspondants viennent s'appliquer les uns contre les autres, et restent ainsi en place sous l'action du système de maintien axial, après libération du système d'armement des moyens élastiques par rotation du manchon 3, afin que la face d'appui 14 du manchon 3 s'applique contre la face d'appui externe 12 de l'extrémité mâle 6, pour maintenir le dispositif d'accouplement en position fermée. Dans ce procédé, le système d'armement des moyens élastiques est constitué par des plots 17, qui sont aménagés sur la face d'appui 14 du manchon 3, et qui coopèrent avec des cames 18 aménagées sur la face d'appui interne 9 de l'extrémité femelle 5.

Le procédé de montage du dispositif d'accouplement représenté sur les figures 10 à 17 est caractérisé en ce que l'extrémité femelle 5 de l'arbre 1 munie des moyens élastiques 23 ou 24 est montée dans la plaque de fermeture 21 munie des deux prolongements latéraux 21 inclus dans le cache de manoeuvre 22. L'embase 19 est engagée dans le cache de manoeuvre 22 et les prolongements latéraux 21 avec lesquels elle est solidarisée. Le système d'armement des moyens élastiques est alors mis en position bloquée. L'accouplement est alors réalisé comme dans le procédé décrit précédemment.

Selon le procédé de montage de l'invention, les moyens élastiques sont constitués par le ressort de torsion et de compression 24, dont une extrémité 36 s'applique contre l'embout 30 de l'extrémité 5, et dont l'autre extrémité 37 s'engage dans l'un des prolongements latéraux 20 du manchon 3. Le système d'armement des moyens élastiques 24 est maintenu en position bloquée par une goupille intégrée de blocage d'armement. Cette goupille intégrée de blocage d'armement est agencée dans l'embase 19 du manchon 3, et est engagée dans l'embout 30 de l'extrémité femelle 5, ce qui correspond à la position de livraison. Le système d'armement est en position libre lorsque l'extrémité mâle 6 est engagée dans l'extrémité femelle 5, ce qui repousse et désengage la goupille intégrée de blocage d'armement, ce qui permet au ressort de torsion et de compression 24 de faire tourner le manchon 3 par rapport à l'extrémité femelle 5, afin d'obtenir la position fermée du dispositif d'accouplement, dont le maintien est garanti par l'action du ressort de torsion et de compression 24.

Selon le procédé de montage de l'invention, les moyens élastiques sont constitués par le ressort de torsion et de compression 24, dont une extrémité 36 s'engage dans l'embout 30 de l'extrémité femelle 5, et dont l'autre extrémité 37 s'applique contre l'un des prolongements latéraux 20 du manchon 3. Le système d'armement des moyens élastiques 24 est maintenu en position bloquée par une goupille escamotable 40 de blocage d'armement disposée entre l'extrémité femelle 5 et le manchon 3, ce qui correspond à la position de livraison, le système d'armement est en position libre lorsque la goupille de blocage 40 est enlevée, ce qui permet au ressort de torsion et de compression 24 de faire tourner le manchon 3 par rapport à l'extrémité femelle 5, ce qui correspond à la position fermée du dispositif d'accouplement, dont le maintien est garanti par l'action du ressort de torsion et de compression 24.

## Revendications

1. Dispositif d'accouplement d'extrémités de deux arbres (1, 2) aptes à tourner suivant un axe commun (X-X) comportant des moyens de liaison en rotation constitués par des profils conjugués agencés à chacune des extrémités (5, 6) des deux arbres (1, 2) sur un plan sensiblement perpendiculaire à l'axe commun (X-X), avec des flancs (7, 8) inclinés par rapport à ce plan, de manière à s'appliquer les uns contre les autres, et à rester en place sous l'action d'un système de maintien axial constitué par un manchon (3) et des moyens élastiques (23, 24), le manchon (3) étant relié axialement à l'un des arbres et entourant l'extrémité de chacun des arbres (1, 2), et les moyens élastiques (23, 24) étant montés à l'intérieur dudit manchon (3) caractérisé en ce que :
- le manchon (3) est en deux parties (19, 20 et 21) qui sont assemblées autour de l'extrémité femelle (5) de l'arbre (1) comportant le profil conjugué en creux, et qui comporte des première et deuxième faces d'extrémité d'appui (13, 14) qui sont sensiblement perpendiculaires à l'axe commun (X-X) ;
- les moyens élastiques (23, 24) sont disposés entre la première face d'appui (13) du manchon (3), et une face d'appui externe (11) de l'extrémité femelle (5) de l'arbre (1) aménagée sensiblement perpendiculairement à l'axe (X-X) ;
- les moyens élastiques (23, 24) agissent par l'intermédiaire de la deuxième face d'appui (14) du manchon (3) sur une face d'appui externe (12) de l'extrémité mâle de l'arbre (2) comportant le profil conjugué en relief et aménagée sensiblement perpendiculairement à l'axe (X-X), après engagement des profils conjugués l'un dans l'autre et libération d'un système d'armement des moyens élastiques (23, 24), qui est constitué par des plots (17) aménagés sur la deuxième face d'appui (14) du manchon (3), qui coopèrent avec des cames (18) aménagées sur la face d'appui interne (9) de l'extrémité femelle (5) aménagée dans un plan sensiblement perpendiculaire à l'axe (X-X).

2. Dispositif d'accouplement selon la revendication 1, caractérisé en ce que les moyens élastiques consistent en un ressort de compression (24).

3. Dispositif d'accouplement selon la revendication 1, caractérisé en ce que les moyens élastiques consistent en des rondelles élastiques (23).

4. Dispositif d'accouplement selon l'une quelconque des revendications précédentes, caractérisé en ce que le manchon (3) comporte :
- une première partie constituée par une embase (19) munie de deux prolongements latéraux (20), et
- une deuxième partie constituée par une plaque de fermeture (21), les prolongements latéraux (20) traversant la plaque de fermeture (21) avec laquelle ils sont solidarisés,
- l'embase (19) comportant la première face d'appui (13) et la plaque de fermeture (21) comportant la deuxième face d'appui (14).

5. Dispositif d'accouplement selon l'une quelconque des revendications 1 à 3, caractérisé en ce que le manchon (3) comporte :
- une première partie constituée par une embase (19), et
- une deuxième partie constituée par une plaque de fermeture (21) munie de deux prolongements latéraux (20) qui sont inclus dans un cache de manoeuvre (22),
- l'embase (19) étant montée dans les prolongements latéraux (20) et le cache de manoeuvre (22) et solidarisée avec eux, et
- l'embase (19) comportant la première face d'appui (13) et la plaque de fermeture (21) comportant la deuxième face d'appui (14).

6. Dispositif d'accouplement selon l'une quelconque des revendications 4 et 5, caractérisé en ce qu'il comprend un embout (30) de guidage du manchon (3) et de centrage des moyens élastiques (23, 24).

7. Dispositif d'accouplement selon la revendication 6, caractérisé en ce que l'embout (30) de guidage et de centrage est un élément indépendant qui comporte une partie cylindrique (31) débouchant dans un trou central (26) aménagé dans l'embase (19) du manchon (3), ladite partie cylindrique (31) portant et centrant les moyens élastiques (23) et étant munie d'une semelle (32) disposée entre la face d'appui externe (11) de l'extrémité femelle (5) et les moyens élastiques (23).

8. Dispositif d'accouplement selon la revendication 6, caractérisé en ce que l'embout (30) est un élément solidaire de l'extrémité femelle (5) avec laquelle il constitue un ensemble monobloc, et ledit embout (30) comporte une partie cylindrique (31) débouchant dans un trou central (26) aménagé dans l'embase (19) du manchon (3), ladite partie cylindrique (31) portant et centrant les moyens élastiques (24).

9. Dispositif d'accouplement selon la revendication 8, caractérisé en ce que les moyens élastiques sont constitués par un ressort de compression (24), le système d'armement étant maintenu en position bloquée par une goupille escamotable de blocage d'armement (40) disposée entre l'extrémité femelle (5) et le manchon (3).

10. Dispositif d'accouplement selon la revendication 8, caractérisé en ce que les moyens élastiques sont constitués par un ressort de compression (24), le système d'armement étant maintenu en position bloquée par une goupille intégrée de blocage d'armement constituée par au moins une clé souple (55) agencée dans une encoche (54) de l'embase (19), ladite clé souple (55) étant munie d'un poussoir (56) qui coopère avec l'embout (30), de manière que l'engagement de l'extrémité mâle (6) dans l'extrémité femelle (5) permette à l'extrémité mâle (6) de repousser le poussoir (56) et de désengager la clé (55) et le poussoir (56) de l'embout (30) de l'extrémité femelle (5).

11. Dispositif d'accouplement selon la revendication 8, caractérisé en ce que les moyens élastiques sont constitués par un ressort de compression (24), le système d'armement étant maintenu en position bloquée par une goupille intégrée de blocage d'armement constituée par une clé (59) munie d'un poussoir (60) et montée dans deux rainures (58) de l'embout (30) de l'extrémité femelle (5), ladite clé (59) étant engagée et plaquée dans une encoche (54) de l'embase (19) par un ressort de compression (34) disposé dans l'embout (30), de manière que l'engagement de l'extrémité mâle (6) dans l'extrémité femelle (5) permette à l'extrémité mâle (6) de repousser le poussoir (60), et de désengager la clé (59) de l'embase (19).

12. Dispositif d'accouplement selon la revendication 8, caractérisé en ce que les moyens élastiques sont constitués par un ressort de torsion et de compression (24) ayant une extrémité (36) qui coopère avec l'embout (30) et une autre extrémité (37) qui coopère avec l'un des prolongements latéraux (20) du manchon (3), le système d'armement étant maintenu en position bloquée par une goupille escamotable de blocage d'armement (40) disposée entre l'extrémité femelle (5) et le manchon (3) de manière qu'après enlèvement de la goupille (40), le ressort de torsion et de compression (24) agisse afin de constituer un système de verrouillage automatique.

13. Dispositif d'accouplement selon la revendication 8, caractérisé en ce que les moyens élastiques sont constitués par un ressort de torsion et de compression (24) ayant une extrémité (36) qui coopère avec l'embout (30), et l'autre extrémité (37) qui coopère avec l'un des prolongements latéraux (20) du manchon (3), le système d'armement étant maintenu en position bloquée par une goupille intégrée de blocage d'armement constituée par au moins une clé souple (55) munie d'un poussoir (56) agencée dans une encoche (54) de l'embase (19), ladite clé souple (55) étant munie d'un poussoir (56) qui coopère avec l'embout (30) de manière qu'après l'engagement de l'extrémité mâle (6) dans l'extrémité femelle (5), qui permet à l'extrémité mâle de repousser le poussoir (56) afin de désengager la clé (55) et le poussoir (56) de l'embout (30) de l'extrémité femelle (5), le ressort de torsion et de compression (24) agisse afin de constituer un système de verrouillage automatique.

14. Dispositif d'accouplement selon la revendication 8, caractérisé en ce que les moyens élastiques sont constitués par un ressort de torsion et de compression (24) ayant une extrémité (36) qui coopère avec l'embout (30), et l'autre extrémité (37) qui coopère avec l'un des prolongements latéraux (20) du manchon (3), le système d'armement étant maintenu en position bloquée par une goupille intégrée de blocage d'armement constituée par une clé (59) qui est munie d'un poussoir (60), agencée dans une encoche (54) de l'embase (19) et montée dans deux rainures (58) de l'embout (30) de l'extrémité femelle (5), ladite clé (59) étant engagée et plaquée dans l'encoche (54) de l'embase (19) par un ressort de compression (34) disposé dans l'embout (30), de manière qu'après l'engagement de l'extrémité mâle (6) dans l'extrémité femelle (5), qui permet à l'extrémité mâle (6) de repousser le poussoir (60) afin de désengager la clé (59) de l'embase (19), le ressort de torsion et de compression (24) agisse afin de constituer un système de verrouillage automatique.

15. Dispositif d'accouplement selon la revendication 4, caractérisé en ce qu'il comporte un cache de manoeuvre (22) solidaire de la plaque de fermeture (21) du manchon (3), ledit cache de manoeuvre (22) entourant le manchon (3) et une partie de l'extrémité femelle (5) correspondante.

16. Dispositif d'accouplement selon la revendication 5, caractérisé en ce qu'il comporte un cache de manoeuvre (22) solidaire de la plaque de fermeture (21) du manchon (3), ledit cache de manoeuvre (22) entourant le manchon (3) et une partie de l'extrémité femelle (5) correspondante et étant muni de deux lumières (42) à travers lesquelles passent deux dents (41) d'une goupille de blocage d'armement (40).

17. Dispositif d'accouplement selon la revendication 6, caractérisé en ce qu'il comporte un système de sécurité du verrouillage de l'accouplement en position fermée, qui est constitué par un ressort de compression (34) disposé dans un évidement (33) aménagé dans l'embout (30) de guidage et de centrage, ledit ressort (34) s'appuyant sur un fond (35) de l'évidement (33) de manière à repousser la face d'appui interne (10) de l'extrémité mâle (6), dans la cas où celle-ci n'est pas verrouillée correctement dans l'extrémité femelle (5).

18. Dispositif d'accouplement selon la revendication 8, caractérisé en ce qu'il comporte un système de sécurité du verrouillage de l'accouplement en position fermée, qui est constitué par une clé (61) munie d'un poussoir (62) et montée dans deux rainures (58) de l'embout (30) de l'extrémité femelle (5), ladite clé (61) étant maintenue dans un fond desdites rainures (58) par un ressort de compression (34) disposé dans l'embout (30), de manière à repousser la face d'appui interne (10) de l'extrémité mâle (6), dans le cas où celle-ci n'est pas verrouillée correctement dans l'extrémité femelle (5).

19. Dispositif d'accouplement selon la revendication 4, caractérisé en ce qu'il comporte un cache de manoeuvre (45) muni d'un fond (46) qui est solidaire de l'embase (19) du manchon (3), et qui a un embout de centrage (47) des moyens élastiques, ledit cache de manoeuvre (45) entourant le manchon (3) et une partie de l'extrémité femelle (5) correspondante.

20. Dispositif d'accouplement selon l'une quelconque des revendications précédentes, caractérisé en ce que le système d'armement est constitué par trois plots équidistants (17) qui sont localisés sur la deuxième face d'appui (14) du manchon (3) ; ces trois plots (17) coopérant avec trois cames (18) localisées sur la face d'appui interne (9) de l'extrémité femelle (5).

21. Dispositif d'accouplement selon la revendication 20, caractérisé en ce que les cames (18) comportent chacune une butée (63).

22. Dispositif d'accouplement selon l'une quelconque des revendications précédentes, caractérisé en ce que les profils conjugués sont constitués chacun de trois flancs équidistants (8 et 7).

23. Procédé de montage du dispositif d'accouplement des deux arbres (1, 2) aptes à tourner suivant un axe commun X-X comportant des moyens de liaison en rotation associés à des moyens de maintien axial selon la revendication 4, caractérisé en ce que l'embase (19) avec les deux prolongements latéraux (20) du manchon (3) est montée sur l'extrémité femelle (5) de l'arbre (1) munie des moyens élastiques (23, 24) ; la plaque de fermeture (21) est engagée sur les deux prolongements latéraux (20) avec lesquels elle est solidarisée ; le système d'armement des moyens élastiques est mis en position bloquée ; et l'extrémité mâle (6) de l'autre arbre (2) est engagée axialement dans l'extrémité femelle (5) jusqu'à ce que des flancs (7 et 8) correspondants viennent s'appliquer les uns contre les autres, et restent ainsi en place sous l'action du système de maintien axial, après libération du système d'armement des moyens élastiques par rotation du manchon (3), afin que la deuxième face d'appui (14) du manchon (3) s'applique contre la face d'appui externe (12) de l'extrémité mâle (6) pour maintenir le dispositif d'accouplement en position fermée ; le système d'armement des moyens élastiques étant constitué par des plots (17) aménagés sur la deuxième face d'appui (14) du manchon (3), qui coopère avec des cames (18) aménagées sur la face d'appui interne (9) de l'extrémité femelle (5).

24. Procédé de montage du dispositif d'accouplement des deux arbres (1, 2) aptes à tourner suivant un axe commun X-X comportant des moyens de liaison en rotation associés à des moyens de maintien axial selon la revendication 5, caractérisé en ce que l'extrémité femelle (5) de l'arbre (1) munie des moyens élastiques (23, 24) est montée dans la plaque de fermeture (21) munie des deux prolongements latéraux (20) inclus dans le cache de manoeuvre (22) ; l'embase (19) est engagée dans le cache de manoeuvre (22) et les prolongements latéraux (20) avec lesquels elle est solidarisée ; le système d'armement des moyens élastiques est mis en position bloquée ; et l'extrémité mâle (6) de l'autre arbre (2) est engagée axialement dans l'extrémité femelle (5) jusqu'à ce que des flancs (7 et 8) correspondants viennent s'appliquer les uns contre les autres, et restent ainsi en place sous l'action du système de maintien axial, après libération du système d'armement des moyens élastiques par rotation du manchon (3), afin que la deuxième face d'appui (14) du manchon (3) s'applique contre la face d'appui externe (12) de l'extrémité mâle (6) pour maintenir le dispositif d'accouplement en position fermée ; le système d'armement des moyens élastiques étant constitué par des plots (17) aménagés sur la deuxième face d'appui (14) du manchon (3), qui coopère avec des cames (18) aménagées sur la face d'appui interne (9) de l'extrémité femelle (5).

25. Procédé de montage selon l'une quelconque des revendications 23 et 24, caractérisé en ce que les moyens élastiques sont constitués par le ressort de torsion et de compression (24), dont une extrémité (36) coopère avec l'embout (30) de l'extrémité femelle (5), et dont l'autre extrémité (37) coopère avec l'un des prolongements latéraux (20) du manchon (3) ; le système d'armement des moyens élastiques (24) est maintenu en position bloquée par une goupille escamotable de blocage d'armement (40) disposée entre l'extrémité femelle (5) et le manchon (3), ce qui correspond à une position de livraison ; le système d'armement est en position libre lorsque la goupille escamotable (40) de blocage est enlevée, ce qui permet au ressort de torsion et de compression (24) de faire tourner le manchon (3) par rapport à l'extrémité femelle (5), ce qui correspond à une position fermée du dispositif d'accouplement, dont le maintien est garanti par l'action du ressort de torsion et de compression (24).

26. Procédé de montage selon l'une quelconque des revendications 23 et 24, caractérisé en ce que les moyens élastiques sont constitués par le ressort de torsion et de compression (24), dont une extrémité (36) coopère avec l'embout (30) de l'extrémité femelle (5), et dont l'autre extrémité (37) coopère avec l'un des prolongements latéraux (20) du manchon (3) ; le système d'armement des moyens élastiques (24) est maintenu en position bloquée par une goupille intégrée de blocage d'armement agencée dans l'embase (19) du manchon (3) et engagée dans l'embout (30) de l'extrémité femelle (5), ce qui correspond à une position de livraison ; le système d'armement est en position libre lorsque l'extrémité mâle (6) est engagée dans l'extrémité femelle (5), ce qui repousse et désengage la goupille intégrée de blocage d'armement, ce qui permet au ressort de torsion et de compression (24) de faire tourner le manchon (3) par rapport à l'extrémité femelle (5), ce qui correspond à une position fermée du dispositif d'accouplement, dont le maintien est garanti par l'action du ressort de torsion et de compression (24).

27. Dispositif d'accouplement selon l'une quelconque des revendications 1 à 22 inclus dans une colonne de direction de véhicule automobile.
